Europäisches Patentamt

**(19) European Patent Office**

Office européen des brevets

(11) Publication number : **0 191 513 B2**

(12) # NEW EUROPEAN PATENT SPECIFICATION

(45) Date of publication of the new patent specification : **09.12.92 Bulletin 92/50**

(51) Int. Cl.[5] : **A23L 1/23,** A23L 1/231, C12N 1/20, C12C 11/04

(21) Application number : **86200089.0**

(22) Date of filing : **21.01.86**

(54) **A process for the preparation of food flavours.**

(30) Priority : **31.01.85 GB 8502425**
**01.04.85 NL 8500956**

(43) Date of publication of application :
**20.08.86 Bulletin 86/34**

(45) Publication of the grant of the patent :
**11.01.89 Bulletin 89/02**

(45) Mention of the opposition decision :
**09.12.92 Bulletin 92/50**

(84) Designated Contracting States :
**AT BE CH DE FR GB IT LI NL SE**

(56) References cited :
**WO-A-82/02323**
**BE-A- 659 731**
**DE-A- 2 003 981**
**DE-A- 2 641 270**
**GB-A- 1 032 687**
**JP-A- 7 307 780**
**JP-A-74 134 887**
**NL-A- 6 501 962**
**US-A- 3 443 969**
**US-A- 3 809 780**

(73) Proprietor : **UNILEVER N.V.**
**Weena 455**
**NL-3013 AL Rotterdam (NL)**
(84) **BE CH DE FR IT LI NL SE AT**
Proprietor : **UNILEVER PLC**
**Unilever House Blackfriars P.O. Box 68**
**London EC4P 4BQ (GB)**
(84) **GB**

(72) Inventor : **de Rooij, Johannes Franciscus Maria**
**5 Swan Green**
**Sellindge Kent TN25 6EX (GB)**
Inventor : **Hakkaart, Marcellinus Jacobus Johannes**
**Krugerlaan 52**
**NL-2806 EK Gouda (NL)**

(74) Representative : **Dries, Antonius Johannes Maria et al**
**Unilever N.V. Patent Division P.O. Box 137**
**NL-3130 AC Vlaardingen (NL)**

EP 0 191 513 B2

## Description

The invention relates to a process for the preparation of a food flavour by enzymatic treatment of yeast.

Such processes are known in the art. Yeast autolysates, which are prepared by subjecting yeast to degradation by the endogeneous enzyme material of yeast, are well-known as food additives. The autolysis can be induced by incubating the yeast cells at a higher temperature by addition of organic solvents, such as ethyl acetate or toluene, by using an increased salt concentration or a combination of these methods. This results in an inactivation of the yeast cells but the enzymes of the yeast material remain active and are available for the actual degradation.

Also there are US-A 3 443 969 (Nabuo Nakajima et al.) and US 3 809 780 (Kengo Ishida et al.) which disclose the treatment of yeast materials with certain enzyme materials resulting in the production of condiments/ seasoning agents. However, no suitable food flavours were thus obtained.

The main conversion taking place during autolysis is the degradation of proteins to peptides and amino acids. The autolysates thus obtained usually have a typical bitter and yeast-like taste. A further disadvantage of these autolysates is that they contain 3′-ribonucleotides because the endogeneous ribonuclease converts RNA into 3′-ribonucleotides, which make no contribution to the flavour.

It is also known in the art to improve the enzymatic degradation of yeast by first degrading the cell walls with an appropriate enzyme, which results in an increase in the yield of autolysate (cf. US Specification (US-A) 3 682 778, Kyowa Hakko Kogyo).

Furthermore, it is known to increase the yield in biodegradation processes by using proteolytic enzymes in conjunction with the endogeneous enzymes (cf. US Specification (US-A) 4 218 481, Standard Oil Co).

Additionally, it is known from Japanese Specification (JP-A) 73 07780 to treat defatted soybean protein with acid protease followed by fermentation with yeast. The fermentation suppresses amino acid formation, eliminates glutamic acid and reduces soybean flavour. The resulting product is a substantially tasteless acidic peptide solution.

Finally, Dutch specification (NL-A) 65 01962 (= BE-A 659 731 = GB-A 1 032 687) (Nestlé) discloses the enzymatic degradation of inactivated yeast.

According to the present invention an improved food flavour is prepared by carrying out the enzymatic degradation of inactivated yeast with at least an enzyme having proteolytic activity, in conjunction with fermentation with yeast or lactic acid producing micro-organisms.

The organoleptic properties ot the flavour material thus obtained are improved as there is no biter taste and no, or a less pronounced, yeast-like note. Moreover, organic acids like lactic acid, succinic acid, etc. also improve the taste.

Suitable yeast starting materials belong to the group consisting of <u>Saccharomyces</u> species, <u>Kluyveromyces</u> species, <u>Candida</u> species, <u>Torula</u> species, <u>Fusarium</u> species and <u>Zymomonas</u> species. Preferred are <u>Saccharomyces</u>, <u>Kluyveromyces</u>, <u>Candida</u> and <u>Torula</u> species. More in particular, yeasts like <u>Saccharomyces</u> <u>cerevisiae</u>, <u>Kluyveromyces lactis</u>, <u>Kluyveromyces fragilis</u>, <u>Kluyveromycesmarxianus</u>, <u>Candida</u> <u>utilis</u> may be used.

Prior to the enzymatic degradation of the yeast, the yeast is inactivated, e.g. by heat treatment at a temperature between 70 and 150°C for 5 to 120 minutes. Inactivation by cooking usually requires an aqueous suspension with a dry matter content up to 30%. Inactivation is, of course, also possible by means of the addition of chemicals or e.g. by radiation.

Once the yeast has been inactivated, both enzymatic degradation and fermentation are carried out in any sequence or simultaneously, provided that a carbon source is available for fermentation.

The enzymatic degradation of the inactivated yeast is carried out by means of suitable enzyme preparations of bacterial, vegetable, yeast or animal origin.

The enzyme preparation used, apart from proteolytic activity, preferably has also one or more than one of the other following activities:

### 1. Proteolytic activity

Preferably one or more of the following enzymes are used :

Pancreatin, Trypsin (from Porcine or bovine pancreatic tissues), Bromelain (from Ananas comosus/bracteatus), Ficin, Molsin, Chymotrypsin, Papain (from Carica Papaya), Chymo-Papain (from Carica Papaya), Pepsin (from Porcine gastric mucosa), Rennin or proteases from <u>Bacillus</u> <u>subtilis</u>, <u>Aspergillus oryzae</u>, <u>Penicillium</u> <u>dupontii</u>, <u>Streptomyces griseus</u>, <u>Mucor miehei/pusillus</u>. hog kidney, etc.

Depending on the particular enzyme used, the incubation is carried out at a pH between 2 and 10 and a temperature between 20 and 80°C. Pepsin e.g. has an optimal activity at pH 2-3, protease from Streptomyces griseus an optimum at pH 9-10 and papain is still active at 70-80°C.

## 2. Cell wall degradation activity

Beta-glucanase derived from <u>Bacillus</u> <u>subtilis/licheniformis</u>, <u>Penicillium</u> <u>emersonii</u>, <u>Aspergillus-niger/oryzae</u>.

The incubation is usually carried out at a temperature between 20 and 70°C and a pH between 3 and 7.

## 3. Amylase or glycogen degrading activity

e.g. alpha- and beta-amylase, derived from <u>Bacillus subtilis</u>, <u>Aspergillus spp</u>, which enzymes are generally used in incubations at pH 4-8 and at a temperature of 20-70°C.

## 4. RNA degrading activity leading to 5′ribonucleotides

Use of e.g. phosphodiesterase, e.g. obtained from malt rootlets or fungal extracts. These are used at pH 3-9 and at a temperature of 20-80°C. Sometimes it is advantageous to add some RNA and/or protein before this step is carried out.

## 5. Lipolytic activity

Pancreatin or pancreatic lipase which is incubated at pH 5-10 and at a temperature between 20 and 70°C.

The enzymatic degradation step of the present invention usually combines several of these enzymatic activities. This can be achieved by simultaneous incubation with a number of enzymes. Also a plurality of incubations with different enzymes is possible, often under different conditions of pH and temperature.

There are, of course, also a number of enzyme preparations commercially available which combine several enzymatic activities, such as pancreatin, etc. When a plurality of enzymatic actions is used, the incubation may lead to the formation of amino acids, peptides, mono- and disaccharides, 5′-ribonucleotides and fatty acids.

It is preferred to use such a plurality of enzyme that proteolytic activity is combined with RNA degradation. More preferred is to include also cell wall degrading enzyme and/or lipolytic enzyme.

In accordance with the present invention the enzymatic degradation is used in conjunction with fermentation with yeast or lactic acid producing micro-organisms. Preferably enzymatic degradation is followed by fermentation so that saccharides are converted inter alia into organic acids like lactic acid, succinic acid, etc. It is also advantageous to carry out enzymatic degradation simultaneously with fermentation.

Fermentation by micro-organisms is usually carried out at a pH from 4.5 to 7.5 and at a temperature of 20-65°C, for a period ranging between 4 hours and 14 days. In the practice of the present invention, micro-organisms are applied which are generally used in the preparation of milk products, meat and meat products, fermented vegetables, fermented beverages, bread, pickles and sauces, such as:

<u>Lactic acid bacteria</u> (e.g.) <u>Lactobacillus acidophilus</u>, <u>L. delbrueckii</u>, <u>L. caseï</u>, <u>L. plantarum</u>, <u>L.fermentum</u>, <u>L.brevis</u>, <u>L. buchneri</u>.

<u>Lactic streptococci</u> (e.g.) <u>Streptococcus lactis</u>, <u>Str.cremoris</u>, <u>Str.diacetylactis</u>, <u>Pediococcus pentosaceus</u>, <u>P. cerevisiae</u>, <u>Leuconostoc gracile</u>, <u>L.cremoris</u>.

<u>Yeast</u>, e.g. <u>Saccharomyces rouxii</u>, <u>S. cerevisae</u>, as well as combinations of the above-mentioned micro-organisms.

The yeast extract obtained in accordance with the present invention typically comprises :

20-45% (w.w∗) of protein material (10-30% of peptides and 5-20% of free amino acids);

0.1-8, preferably 0.5-6% (w.w.∗) of guanosine-5′-monophosphate;

8-20% of lactic acid.

∗ calculated on dry extract

Once enzymatic degradation and fermentation have been carried out, further downstream processing of the resulting product is recommendable, such as removal of insoluble material (filtration or centrifuging), concentration (evaporation of water, spray-drying, oven drying, drum drying or freeze-drying, optionally in the presence of a carrier like maltodextrin) or pasteurization e.g. for 5-10 minutes at 80°C. Any sequence is feasible.

The food flavour thus obtained can be used as such to impart or reinforce the flavour of foodstuffs, optionally in combination with other flavouring materials. The combination can be physical mixing or chemically reacting to form reaction flavours.

The invention also comprises the yeast extract prepared by the processes described above.

One embodiment of the present invention is therefore a process for flavouring foodstuffs by incorporating in the foodstuff a flavour as disclosed hereinbefore. More in particular the flavour material is used to improve the flavour of soups, meat products, instant gravies, margarine, frying fat, drinks, bakery products, cheese, confectionary products and the like. The amount of flavour used in the foodstuffs varies widely but usually ranges between 0.1 and 10% (calculated as dry yeast extract flavour on the foodstuff ready for consumption). Preferably these amounts range between 0.15 and 5%.

Example 1

0.67 kg of Saccharomyces cerevisiae (baker's yeast ex Gist Brocades, Delft, The Netherlands, with a dry matter content of 30%) were mixed with 0.33 kg of water. The slurry thus obtained was boiled at 100°C for 10 minutes, subsequently cooled to 60°C and the pH was adjusted to pH 4.0 by the addition of aqueous phosphoric acid.

2.2 g of MKC cellulase P 4000 (ex Miles Kali Chemie GmbH & Co KG, Hannover-Kleefeld, Germany) having an activity of 4,000 CU/g were added and the mixture was stirred for 16 hours at 60°C. The slurry was then heated to 100°C for 10 minutes, cooled to 50°C and the pH was adjusted to 7.0 by the addition of some aqueous sodium hydroxide.

3.0 g of Brew-N-zym GPGL (ex Jan Dekker, Wormerveer, The Netherlands) having a proteolytic activity of 100 NU/ml were then added and the mixture was stirred for 3 hours at 50°C. The mixture was then heated to 100°C for 5 minutes and 0.5 kg of water were added and the slurry was cooled to 40°C, after which the pH of the slurry was adjusted to 5.8 by the addition of phosphoric acid.

Now 0.5% (v/v) of a pre-culture of Lactobacillus buchneri were added. This pre-culture was a dense pre-culture of the organism which grew at a logarithmic rate on a conventional medium. The slurry was stirred with this micro-organism for 16 hours at 40°C.

Subsequently the insoluble matter was removed from the slurry by filtration, the filtrate was pasteurized at 80°C for 20 minutes and concentrated and a paste with a dry matter content of 60% was obtained. This product was completely water-soluble and had a low sodium chloride content. Upon organoleptic comparison with yeast autolysate, the product according to the present invention showed a better meat-like taste and, moreover, the yeast-like note, which so often occurs with yeast autolysates, was absent.

Example 2

0.2 kg of Kluyveromyces lactis (ex Bel Industries, Paris, France) were mixed in a reaction vessel with 0.7 kg of water. The slurry thus obtained was heated to 100°C for 20 minutes and cooled to 50°C and the pH was adjusted to 4.5 by the addition of aqueous phosphoric acid.

20 kg of MKC hemicellulase (ex Miles Kali Chemie GmbH & Co KG, Hannover-Kleefeld, Germany, having an activity of 2,500 HCU/g) were then added together with 5 g of malt rootlets (ex Export Mouterij "Nederland", Wageningen, The Netherlands, dry matter content of 94%) and the mixture was stirred for 16 hours at 60°C. The pH of the slurry was then adjusted to 5.0 by the addition of some aqueous sodium hydroxide.

0.8 g of papain (ex Merck & Co, Darmstadt, Germany, with an activity of 30,000 USP-U/mg) and 0.1 g of cystein were added, after which the mixture was stirred for 3 hours at 60°C. The slurry was then heated to 100°C for 10 minutes and 0.33 kg of water were added. The slurry was cooled to 45°C and the pH was adjusted to 5.8 by the addition of some aqueous sodium hydroxide.

Now 0.2% (v/v) of a pre-culture of Lactobacillus-delbrueckii were added. This dense pre-culture of the micro-organism grew at a logarithmic rate on a conventional medium. The slurry was then stirred for 16 hours at 40°C.

Subsequently the solid material was separated by centrifuging and the clear solution thus obtained was pasteurized and concentrated. Spray-drying on a conventional carrier yielded a yellowish powder that was microbially stable and had an excellent flavour.

Example 3

0.07 kg of Kluyveromyces lactis (ex Bel Industries, Paris, France) was mixed with 0.07 kg RNA from Torula species (ex Sigma Chemical Company, St Louis, USA) and 0.7 kg of water and heated for 20 minutes to 100°C, subsequently cooled to 50°C and the pH adjusted to 5.0 by the addition of some aqueous phosphoric acid. 1.0 kg MKC hemicellulase (ex Miles Kali Chemie GmbH, Hannover-Kleefeld, Germany) with an activity of 2500 HCU/g was then added, together with 0.07 kg of malt rootlets (ex Export Mouterij "Nederland", Wageningen, Netherlands), which rootlets have a dry matter content of 94% and which rootlets have been pretreated as described in CA-A-827 117 (Schwarz Bio Research), Example 1 under A and B.

The mixture was then stirred for 16 hours at 60°C. Subsequently 8.8 g of papain (ex Merck) was added and the further procedure as described in Example 2 was followed.

Example 4

0.2 kg of <u>Torula</u> yeast (ex Attisholz AG, Luterbach, Switzerland, dry matter content 98%) were mixed in a reaction vessel with 0.8 kg of water. The slurry thus obtained was heated to 100°C for 40 minutes and cooled to 55°C and the pH was adjusted to 4.0 by the addition of aqueous phosphoric acid.

2.0 g of MKC Cellulase P 4000 (ex Miles Kali Chemie GmbH & Co KG, Hannover-Kleefeld, Germany, with an activity of 4,000 CU/g) were added and 1.0 g of Bromelain (ex Sigma Chemie GmbH, Taufkirchen, West Germany, with an activity of 2,000 U/g), after which the mixture was stirred for 8 hours at 55°C. The slurry was then cooled to 40°C and 0.25 kg of water were added and the pH was adjusted to 5.8.

Now 0.8% (v/v) of a pre-culture of <u>Lactobacillus-plantarum</u> were added. This pre-culture was a dense pre-culture, which grew at a logarithmic rate. The slurry was stirred for 16 hours at 40°C and was then cooled to 25°C.

Subsequently 0.1% (v/v) of a fresh densely grown pre-culture of <u>Saccharomyces</u> <u>rouxii</u> were added at 25°C and the slurry was stirred for 48 hours at that temperature. The slurry thus obtained was then processed as described in Example 2 and a yellowish powder was obtained.

Example 5

0.2 kg of <u>Saccharomyces</u> <u>cerevisiae</u> (ex Nedalco N.V., Bergen op Zoom, The Netherlands, dry matter content 97%) were mixed in a reaction vessel with 0.8 kg of water. The slurry thus obtained was heated to 100°C for 10 minutes and subsequendy cooled to 50°C and the pH was adjusted to 8.0 by the addition of aqueous sodium hydroxide.

1.0 g of pancreatin (ex Merck, Darmstadt, Germany, having an activity of 30,000 FIP-U/g [lipase]) were added to the slurry and this was stirred for 2 hours at 60°C. The pH of the slurry was then adjusted to 4.0 by the addition of some aqueous phosphoric acid.

10 g of Brew-N-enzym Filtranase L 5 ex Jan Dekker, Wormerveer, The Netherlands, having an activity of 9,500 Endo-beta-1,4-glucanase U/ml) were added together with 0.8 g of ficin (ex Sigma Chemie GmbH, Taufkirchen, West Germany, activity 1.5 U/mg protein) and stirred for 6 hours at 60°C. The slurry was then heated to 100°C for 10 minutes and the slurry was cooled to 40°C and the pH was adjusted to 5.8 by the addition of some aqueous sodium hydroxide.

Now 0.5% (v/v) of a pre-culture of <u>Streptococcusdiacetylactis</u> were added. This was a densely grown pre-culture which grew at a logarithmic rate on a conventional medium. Together with this fermentation 3.0 g of Brew-N-enzym/GPGL (ex Jan Dekker, Wormerveer, The Netherlands) were added. Subsequently the slurry was stirred for 16 hours at 40°C.

The slurry was then processed as described in Example 2 and a fine yellowish powder was obtained.

Example 6

A meat flavour composition was prepared by mixing of the following ingredients :

| | |
|---|---|
| 200 g | of yeast extract paste obtained according to Example 1 |
| 10 g | glucose |
| 2 g | cystein |
| 3 g | thiamine-HCl salt |
| 2 g | tallow |

The mixture was heated for 90 minutes whilst refluxing. After cooling to 40°C, 200 g of maltodextrin and 200 g of water were added. The solution thus obtained was spray-dried.

The spray-dried powder, when added to an 0.5% aqueous solution of cooking salt in an amount of 1.5%, imparted an excellent taste of boiled beef, which closely resembled the taste of authentic beef broth.

Example 7

2.5 g of a spray-dried yeast extract as prepared according to Example 5 were added to the following dry soup composition :

| | |
|---|---|
| 10 g | sodium chloride |
| 2.5 g | monosodium glutamate |
| 6 g | tallow |
| 20 g | vermicelli |
| 4 g | dried chopped onion |

1.5 g     dried chopped carrots

0.25 g    of a mixture of herbs and spices

The total composition was taken up in 1 litre of water and boiled for 20 minutes. An expert tasting panel found the soup rounded off, savoury and sweet beef-like.

Example 8

2.5 g of a spray-dried yeast extract obtained according to Example 3 was added to the dry soup composition described in Example 7. The total composition was taken up in 1 litre water and boiled for 20 minutes.

An expert taste panel found the soup to have a more rounded off taste, spicy and resembling sweet chicken flesh.

Example 9

2.0 g of a spray-dried yeast extract as described in Example 4 were added to the fish sauce composition:

8 g     skimmed milk powder

10 g    wheat flour

1 g     sodium chloride

1 g     monosodium glutamate

80 g    water

After heating the composition to 100°C, a sauce was obtained having a full flavoured fresh taste, which sauce was used successfully in the ratio of 2 parts of sauce to 1 part of boiled codfish.

Example 10

0.1 part of spray-dried yeast extract as prepared according to Example 2 was added to the aqueous phase of a margarine, which aqueous phase consisted for

5 %    of water

10 %   of skimmed milk

1 %    of sodium chloride

This mixture was adjusted to pH 5.6. The fat phase consisted of 10% hardstock obtained by interesterification of hydrogenated soybean oil (melting point 43°C) and 42% palm oil (melting point 58°C) and 90% liquid sunflower oil and worked into a margarine in the usual way. When used as a table margarine, a cool cream-like impression was obtained. When used as a frying margarine, at 140°C a sweet flavoured taste developed reminiscent of dairy butter.

**Claims**

1. A process for the preparation of a food flavour by inactivating yeast and thereafter degrading it with enzymes, characterized in that at least an enzyme having proteolytic activity is used in the enzymatic degradation and that simultaneously or subsequently a fermentation is carried out with yeast or with lactic acid producing micro-organisms.

2. A process according to claim 1 characterized in that an RNA degrading enzyme, optionally after incorporation of additional RNA in the substrate , is used in the enzymatic degradation, resulting in the formation of 5′-ribonucleotides.

3. A process according to any of the preceding claims characterized in that a cell wall degrading enzyme is used in the enzymatic degradation.

4. A process according to any of the preceding claims characterized in that a glycogen degrading enzyme is used in the enzymatic degradation.

5. A process according to any of the preceding claims characterized in that a lipolytic enzyme is used in the enzymatic degradation.

6. A process according to any of the preceding claims characterized in that subsequent downstream processing takes place.

7. A process according to any of the preceding claims characterized in that the yeast starting material belongs to the group consisting of <u>Saccharomyces</u>, <u>Kluyveromyces</u>, <u>Candida</u> and <u>Torula</u>.

8. A process according to any of the preceding claims characterized in that the fermentation is carried out with lactic acid producing micro-organisms.

9. A food flavour obtainable by a process as described in any of the preceding claims.

10. A process for flavouring foodstuffs, characterized in that a food flavour according to claim 9 is used.


**Patentansprüche**

1. Verfahren zur Herstellung eines Nahrungsmittelaromas durch Inaktivierung von Hefe und durch deren anschließenden Abbau mit Enzymen, dadurch **gekennzeichnet**, daß für den enzymatischen Abbau mindestens ein Enzym mit proteolytischer Aktivität verwendet wird und daß gleichzeitig oder anschließend eine Fermentation mit Hefe oder Milchsäure produzierenden Mikroorganismen durchgeführt wird.

2. Verfahren nach Anspruch 1, dadurch gekennzeichnet, daß ein RNA abbauendes Enzym, wahlweise nach Hinzufügen von zusätzlicher RNA zum Substrat, zum enzymatischen Abbau verwendet wird und dabei 5′-Ribonucleotide gebildet werden.

3. Verfahren nach einem der vorstehenden Ansprüche, dadurch gekennzeichnet, daß bei dem enzymatischen Abbau ein Zellwand abbauendes Enzym verwendet wird.

4. Verfahren nach einem der vorstehenden Ansprüche, dadurch gekennzeichnet, daß bei dem enzymatischen Abbau ein Glykogen abbauendes Enzym verwendet wird.

5. Verfahren nach einem der vorstehenden Ansprüche, dadurch gekennzeichnet, daß bei dem enzymatischen Abbau ein lipolytisches Enzym verwendet wird.

6. Verfahren nach einem der vorstehenden Ansprüche, dadurch gekennzeichnet, daß eine anschließende Nachverarbeitung erfolgt.

7. Verfahren gemäß einem der vorstehenden Ansprüche, dadurch gekennzeichnet, daß das Hefe-Ausgangsmaterial zu der Gruppe bestehend aus <u>Saccharomyces</u>, <u>Kluyveromyces</u>, <u>Candida</u> und <u>Torula</u> gehört.

8. Verfahren nach einem der vorstehenden Ansprüche, dadurch gekennzeichnet, daß die Fermentation mit Milchsäure produzierenden Mikroorganismen durchgeführt wird.

9. Nahrungsmittelaroma, erhältlich durch ein Verfahren gemäß einem der vorstehenden Ansprüche.

10. Verfahren zum Aromatisieren von Lebensmitteln, dadurch gekennzeichnet, daß ein Nahrungsmittelaroma gemäß Anspruch 9 verwendet wird.


**Revendications**

1. Procédé de préparation d'un arôme pour aliments par désactivation de la levure et, ensuite, sa dégradation avec des enzymes, caractérisé en ce qu'on utilise au moins une enzyme ayant une activité protéolytique dans la dégradation enzymatique et en ce qu'on effectue simultanément ou ultérieurement une fermentation avec de la levure ou des microorganismes produisant de l'acide lactique.

2. Procédé selon la revendication 1, caractérisé en ce qu'on utilise une enzyme de dégradation d'ARN, facultativement après incorporation d'un supplément d'ARN dans le substrat pour la dégradation enzymatique pour obtenir la formation de 5′-ribonucleotides.

3. Procédé selon l'une quelconque des revendications précédentes, caractérisé en ce qu'on utilise une enzyme de dégradation des parois cellulaires pour la dégradation enzymatique.

4. Procédé selon l'une quelconque des revendications précédentes, caractérisé en ce qu'on utilise une enzyme de dégradation du glycogène dans la dégradation enzymatique.

5. Procédé selon l'une quelconque des revendications précédentes, caractérisé en ce qu'on utilise une enzyme lipolytique dans la dégradation enzymatique.

6. Procédé selon l'une quelconque des revendications précédentes, caractérisé en ce qu'un traitement ultérieur en aval a lieu.

7. Procédé selon l'une quelconque des revendications précédentes, caractérisé en ce que la levure de départ appartient à la catégorie comprenant Saccharomyces, Kluyveromyces, Candida et Torula.

8. Procédé selon l'une quelconque des revendications précédentes, caractérisé en ce qu'on effectue la fermentation avec des microorganismes produisant de l'acide lactique.

9. Arôme pour aliments qu'on obtient par un procédé décrit dans l'une quelconque des revendications précédentes.

10. Procédé d'aromatisation de produits alimentaires, caractérisé en ce qu'on utilise un arôme pour aliments selon la revendication 9.